(19) Europäisches Patentamt
European Patent Office
Office européen des brevets

(11) Publication number: **0 451 563 A2**

# (12) EUROPEAN PATENT APPLICATION

(21) Application number: **91104346.1**

(22) Date of filing: **20.03.91**

(51) Int. Cl.5: **C08L 71/12**, C08L 77/00, C08L 51/06

(30) Priority: **22.03.90 IT 1977790**

(43) Date of publication of application: **16.10.91 Bulletin 91/42**

(84) Designated Contracting States: **AT BE DE DK ES FR GB NL SE**

(71) Applicant: **MONTEDIPE S.r.l.**
**16, Piazza della Repubblica**
**I-20121 Milano(IT)**

(72) Inventor: **Vianello, Domenico, Dr. Economy**
**178, Via Orlando**
**I-30030 Campalto, Venezia(IT)**
Inventor: **Benetton, Armando**
**4, Via Zuccato**
**I-31100 Treviso(IT)**
Inventor: **Moro, Alessandro, Dr.-Chem.**
**37, Via Molinella**
**I-30030 Cazzago Venezia(IT)**
Inventor: **Pippa, Roberto, Dr.-Chem.**
**14, Via Perosi**
**I-30033 Noale, Venezia(IT)**
Inventor: **Longo, Aldo, Dr.-Chem.**
**5, Via Paglia**
**I-46010 Castelnuovo Angeli, Mantova(IT)**

(74) Representative: **Weinhold, Peter, Dr. et al**
**Patentanwälte Dipl.-Ing. G. Dannenberg Dr. P. Weinhold Dr. D. Gudel Dipl.-Ing. S. Schubert Dr. P. Barz Siegfriedstrasse 8**
**W-8000 München 40(DE)**

## (54) Thermoplastic compositions based on polyphenylene ether and polyamide.

(57) Described are thermoplastic compositions having a good balance of mechanical and thermal properties, a highly satisfactory impact strength and a good processability, comprising:

(a) a functionalized polyphenylene ether;
(b) a polyamide;
(c) an olefinic elastomer containing a vinylaromatic monomer grafted thereon.

EP 0 451 563 A2

The present invention relates to thermoplastic compositions based on polyphenylene ether and polyamide.

More in particular, the present invention relates to a composition having a good balance of mechanical and thermal properties, a highly satisfactory impact strength and a good processability and comprising polyphenylene ether and polyamide.

The polyphenylene ether resins (also known as polyphenylene oxide resins) represent a well-known family of technopolymers and are characterized by a satisfactory combination of thermal, mechanical and electrical properties within a wide temperature range. This combination of properties makes the polyphenylene ether resins suitable for use in a variety of applications, particularly by means of injection molding or extrusion techniques.

In spite of these numerous possible commerical applications of the polyphenylene ether resins (PPE), their utilization is limited due to their poor processability, mainly attributable to the low fluidity in the molten state which can cause some difficulties during the extrusion and injection molding operations.

A further drawback is that the polyphenylene resins show a poor solvent resistance after moulding and a low resiliency (IZOD), wherefore the use thereof for certain applications is further limited.

To obviate these shortcomings it has been suggested to blend the polyphenylene ether resins with other polymers which possess said lacking properties.

Thus, for example, US-A-3,379,792 suggests to improve the fluidity of the polyphenylene ether resins by adding a polyamide thereto. According to the teachings of this patent, however, the blends are limited to a polyamide concentration of not more than 25% by weight; in fact, a higher amount of polyamide involves delamination and a significant decay of the other physico-mechanical properties such as resiliency.

Apart from this teaching, it is known from the literature that polyphenylene ether resins and polyamide resins are not fully compatible with each other over a wide compositional range and that poor properties and phase separation occur when the polyamide concentration is rather high.

To overcome this problem, it has been proposed to add to the mixture an additive which is reactive with the polyphenylene ether and polyamide resins, generally known as compatibilizing agent.

Thus, according to US-A-4,315,086 and the corresponding EP-A-24,120, compositions comprising polyphenylene ether and polyamide showing superior resilience characteristics and excellent processability, are preparable by mixing the two polymers in the molten state with 0.01 to 30% by weight of a compound selected from a) liquid diene polymers; b) epoxy compounds and c) compounds having both (i) a ethylenic double bond (C=C) or triple bond (C≡C), and (ii) a carboxy, anhydride, amide, imide, carboxylic, amino or hydroxyl ester group.

JP-A-84/66452 describes similar polymeric compositions prepared by using a polyphenylene ether which has been pretreated with one of the above compounds a) to c) in the presence of a free radical starter.

However, the resulting compositions do not exhibit an excellent balance of properties and, furthermore, the resilience (impact strength) improvements are not yet sufficient.

In order to obtain a further improvement of this characteristic it has been proposed to add a rubber or an elastomeric polymer having a second order glass transition temperature (Tg) lower than 10°C to the polyphenylene ether -polyamide-compatibilizing agent compositions.

To this end US-A-4,315,086 proposes to add natural rubbers, butadiene polymers, butadiene/styrene copolymers, isoprene polymers, butadiene/acrylonitrile copolymers, acrylate polymers, ethylene/propylene copolymers, ethylene/propylene/diene terpolymers, etc.

International patent application PCT/US/86/01511 and US-A-4,654,405 describe thermoplastic compositions comprising compatibilized polyphenylene ether, polyamide and an impact modifier such as, e.g., a polystyrene-polybutadiene-polystyrene three-block copolymer (S-B-S).

International patent application PCT/US/87/00479 describes thermoplastic compositions comprising functionalized polyphenylene ether, polyamide and an impact modifier consisting of a selectively and partially hydrogenated two-block copolymer of the type A-B, wherein block A is a styrene polymer and block B is an ethylene/propylene copolymer.

EP-A-236,596 describes a polymeric composition comprising a polyphenylene ether, a polyamide, an agent capable of improving the compatibility of the polyamide and of the polyphenylene ether and an agent which is suitable for improving the impact strength of the mix and which can be an ethylene/propylene copolymer or an ethylene/propylene/conjugated diene terpolymer onto which a vinyl monomer having an carboxylic acid group or a derivative thereof or an epoxy group has been grafted.

EP-A-270246 describes a thermoplastic composition based on polyphenylene ether and polyamide which contains from 5 to 100 parts, per 100 parts of the blend, of a copolymer consisting of an ethylene/alpha-olefin rubber-like copolymer, an alkenyl aromatic compound and an unsaturated carboxylic

acid or an anhydride thereof, which not only is compatible with said two polymers but also causes substantial improvement of the impact strength thereof. The presence of the unsaturated carboxylic acid or of its anhydride is considered absolutely necessary to this end in said patent application.

The compositions thus obtained, however, do not exhibit the best combination of properties for all intended uses.

In particular, the presence of the unsaturated carboxylic acid or its anhydride, grafted onto the ethylene/alpha-olefin rubber-like copolymer, improves the compatibility, but at the expense of the impact strength, which decreases as the amount of said grafted acid or anhydride increases.

It has now surprisingly been found that a thermoplastic composition based on polyphenylene ether and polyamide, having a high flowability in the molten state and, therefore, a good processability, an excellent balance of thermal and mechanical properties as well as an excellent impact strength, can be prepared by mixing in the molten state:

(a) a polyphenylene ether functionalized with at least one compound containing in its molecular structure at least one carbon-carbon couble or triple bond and at least one group selected from carboxylic acid groups, anhydride groups, amide groups, imide groups, ester groups,and amino and hydroxy groups;

(b) a polyamide; and

(c) an olefinic elastomer containing a vinylaromatic monomer grafted thereon.

Thus, one object of the present invention is a thermoplastic composition having an excellent balance of mechanical and thermal properties, a high impact strength and a good flowability in the molten state, and comprising:

a resin composition of:

(A) 5 to 95% by weight of polyphenylene ether functionalized with a compound containing in its molecular structure at least one carbon-carbon double or triple bond and at least one carboxylic acid, anhydride, amide, imide, ester, amino or hydroxyl group, and

(B) 95 to 5% by weight of polyamide; and

(C) 1 to 100 parts by weight, per 100 parts by weight of (A) + (B), of olefinic elastomer containing a vinylaromatic monomer grafted thereon.

Preferably, the thermoplastic compositions of the present invention comprise the above components (A), (B) and (C) in the following proportions referred to the sum of said three components:

(a) from 25 to 70% by weight of functionalized polyphenylene ether (A);

(b) from 25 to 70% by weight of polyamide (B), and

(c) from 5 to 50% by weight of olefinic elastomer (C); the sum of the three components (A), (B) and (C) being equal to 100%.

The concentration of vinylaromatic monomer in the olefinic elastomer (C) generally is higher than (at least) 1% by weight and preferably ranges from 30 to 60% by weight.

The polyphenylene ethers used in the compositions of the present invention are a well-known class of polymers. They are broadly utilized in industry, especially as technopolymers in applications which call for tenacity and thermal stability.

These polyphenylene ethers may be polymers or copolymers which comprise a plurality of structural units of general formula (I):

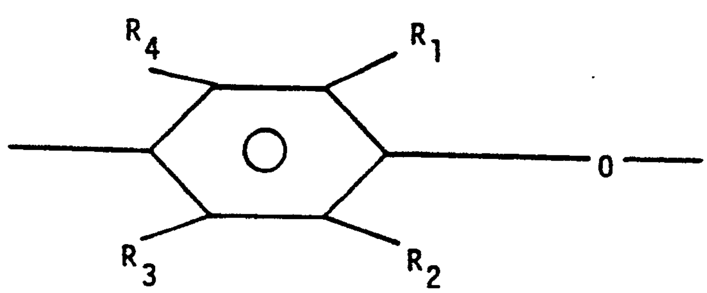

(I)

wherein $R_1$, $R_2$, $R_3$ and $R_4$ independently represent an optionally substituted hydrocarbon radical, halogen or hydrogen.

Preferred examples of $R_1$, $R_2$, $R_3$ and $R_4$ are hydrogen, halogen such as chlorine, bromine or fluorine, hydrocarbon radicals containing from 1 to 18 carbon atoms such as, for example, (preferably $C_1$-$C_8$,optionally substituted) alkyl radicals such as methyl, ethyl, n- and i-propyl, n-, sec- and tert-butyl, n-amyl, n-hexyl, 2,3-dimethylbutyl, chloroethyl, hydroxyethyl, phenylethyl, hydroxymethyl, carboxymethyl, methox-

ycarbonylethyl and cyanoethyl, (preferably $C_6$-$C_{12}$,optionally substituted) aryl radicals such as phenyl, chlorophenyl, methylphenyl, dimethylphenyl, ethylphenyl and benzyl; and allyl.

These polymers and the processes for preparing them are described, e.g., in US-A-3,226,361; 3,234,183; 3,306,874; 3,306,875; 3,257,357; and 3,257,358.

Preferred polyphenylene ethers of the present invention are those of general formula (II):

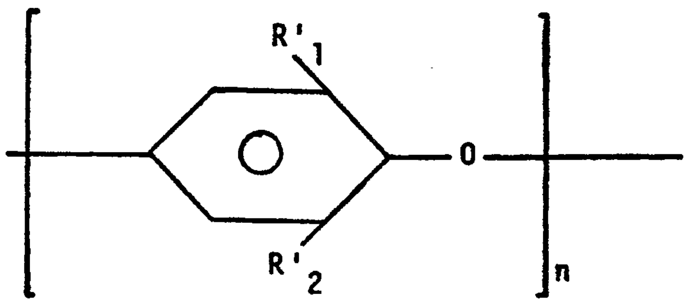

(II)

wherein $R'_1$ and $R'_2$ independently are alkyl radicals containing from 1 to 4 carbon atoms (e.g. methyl or ethyl) and n is at least 50 and preferably ranges from about 60 to about 600.

Illustrative examples of polyphenylene ethers which are particularly suitable for the compositions of the present invention are:

- poly(2,6-di-methyl-1,4-phenylene)ether;
- poly(2,6-di-ethyl-1,4-phenylene)ether;
- poly(2-methyl-6-ethyl-1,4-phenylene)ether;
- poly(2,6-di-propyl-1,4-phenylene)ether;
- poly(2-ethyl-6-propyl-1,4-phenylene)ether and the like;

the most preferred polyphenylene ether is poly(2,6-di-methyl-1,4-phenylene)ether.

The term "polyphenylene ether", whenever used in the present specification and in the claims, includes both the homopolymers and the copolymers containing the structural units of, e.g., formula (I) indicated hereinbefore, such as, e.g., the copolymers comprising units deriving from 2,6-di-methyl phenol and 2,3,6-tri-methyl phenol; as well as the grafted copolymers prepared by grafting one or more vinyl monomers such as acrylonitrile or vinylaromatic compounds such as styrene or polymers such as polystyrene or elastomers onto the polyphenylene ether chain.

Polyphenylene ethers generally have a number average molecular weight (determined by gel permeation chromatography) of from about 5,000 to about 120,000 and their inherent viscosity generally is higher than (or at least) 0.1 dl/g and very often ranges from 0.30 to 0.90 dl/g, as measured in chloroform at 23°C.

These polyphenylene ethers can be produced by oxidation of a phenol compound with oxygen or an oxygen-containing gas in the presence of a catalyst for the oxidative coupling. Any known catalyst suitable for the oxidative polymerization can be utilized. Generally said catalysts comprise at least one compound of a heavy metal such as copper, manganese or cobalt, usually in combination with other types of catalytic compounds. Examples of suitable catalysts are those containing a cuprous or cupric salt, for example a cuprous salt in combination with a tertiary amine and/or a secondary amine (such as cuprous chloride-trimethylamine and dibutylamine, cuprous acetate-triethylamine and cuprous chloride-pyridine); or a cupric salt in combination with a tertiary amine and a hydroxide of an alkali metal (such as cupric chloride-pyridine-potassium hydroxide); these catalysts are described, for example, in US-A-3,306,874; 3,306,875; 3,914,266 and 4,028,341.

Another class of suitable catalysts are those which contain manganese or cobalt, frequently complexed with one or more chelating and/or complexing agents such as di-alkylamines, alkanolamines, alkylenediamines, o-hydroxyaromatic aldehydes, o-hydroxyazo compounds, omega-hydroxy-oximes, o-hydroxyaryl-oximes and beta-diketones. All these catalysts are well known in literature and are described, for example, in US-A-3,956,242; 3,962,181; 3,965,069; 4,075,174; 4,093,595-598; 4,102,865; 4,184,034; 4,385,168, etc.

The functionalizing compound utilized according to the present invention contains, as mentioned above, one or more carbon-carbon double or triple bonds in combination with various functional groups comprising amino, hydroxy, carboxylic groups and derivatives of carboxylic acids such as anhydride, amide, imide and ester. Examples of these functionalizing compounds are maleic acid, fumaric acid, maleic anhydride, maleimides (such as N-phenylmaleimide and 1,4-phenylene-bis-methylene-$\alpha$-$\alpha'$-bismaleimide), maleic hydrazide, unsaturated mono-carboxylic acids such as acrylic acid, crotonic acid, methacrylic acid and oleic

acid, unsaturated alcohols such as allyl alcohol and crotyl alcocol and unsaturated amines such as allylamines.

The preferred compounds are maleic anhydride, maleimides and fumaric acid, in particular maleic anhydride (due to its high reactivity).

The functionalized polyphenylene ethers are preparable by simple mixing of the two reagents in the optional presence of a free radical starter (initiator) under conditions suitable for the formation of an intimate mixture and at temperatures which are high enough for the obtainment of a molten product; typical temperatures range from about 230 to about 350 °C.

Another method which can be utilized for preparing the functionalized polyphenylene ethers comprises dissolving the polyphenylene ether in a suitable solvent (for example toluene) and then adding the functionalizing compound and a free radical initiator (such as benzoyl peroxide), also dissolved in a solvent (preferably that in which the polymer has been dissolved). The resulting mixture is then heated to a temperature higher than about 80 °C, for example about 100 to about 120 °C, and then the reaction product is separated by precipitation.

The proportions of polyphenylene ether and of functionalizing compound are not critical. Generally, however, about 0.01 to about 5 parts and preferably about 0.1 to about 3 parts by weight of functionalizing compound are present per 100 parts by weight of polyphenylene ether.

The polyamides which are suitable for the compositions of the present invention can be prepared by polymerization of monoamino-carboxylic acids or the corresponding lactams having at least two carbon atoms between the amino group and the carboxylic group; or by polymerization of substantially equimolar amounts of a diamine which contains at least two carbon atoms between the amine groups and a dicarboxylic acid; or also by polymerization of a (mono)amino-(mono)carboxylic acid and/or a lactam thereof, as defined above, along with substantially equimolar amounts of diamine and of dicarboxylic acid. The dicarboxylic acid can be utilized in the form of a derivative thereof such as, for example, an ester or an acid chloride.

The term "substantially equimolar" is used to denote both strictly equimolar amounts (1:1) and small deviations therefrom, as required by conventional techniques in order to stabilize the viscosity of the resulting polyamides (e.g. from 0.95:1 to 1.05:1 and particularly from 0.98:1 to 1.02:1).

Examples of monoamino-monocarboxylic acids or lactams thereof, which are utilizable for preparing polyamides, comprise the compounds containing from 2 to 16 carbon atoms between the amine group and the carboxylic group, said carbon atoms forming a ring with the -CO-NH- group in the case of lactams. Typical examples of aminocarboxylic acids and lactams are: omega-amino-caproic acid, butyrolactam, pivalolactam, caprolactam, capryl-lactam, enantolactam, undecanolactam, dodecanolactam, 3- and 4-amino-benzoic acid, etc.

Diamines suitable for being utilized in the preparation of polyamides comprise alkyl diamines having a straight or branched chain, aryl diamines and alkyl-aryl diamines.

Preferred examples of suitable diamines are those of general formula (III):

$$H_2N-(CH_2)_p-NH_2$$

wherein p is an integer ranging from 2 to 16 (preferably from 2 to 12), such as trimethylene diamine, tetramethylene diamine, pentamethylene diamine, octamethylene diamine and particularly hexamethylene diamine, as well as trimethylhexamethylenediamine, meta-phenylene diamine, meta-xylylene diamine and the like.

The dicarboxylic acids can be aliphatic or aromatic. Among the aromatic acids isophthalic acid and terephthalic acid are particularly preferred.

The preferred aliphatic acids are those of general formula (IV):

$$HOOC-R-COOH \qquad (IV)$$

wherein R is divalent aliphatic group containing at least two carbon atoms and preferably from 2 to 18 carbon atoms, such as, e.g., sebacic acid, octadecandioic acid, suberic acid, glutaric acid, pimelic acid and adipic acid.

Typical examples of polyamides or nylons, as they are usually called, are nylon 6, nylon 6,6, nylon 11, nylon 12, nylon 6,3, nylon 6,4, nylon 6,10 and nylon 6,12.

Partially aromatic polyamides can also be utilized in the compositions of the present invention. The term

"partially aromatic polyamides" denotes polyamides which may be obtained by substituting, in part or as a whole, an aromatic residue for an aliphatic residue in an aliphatic nylon. Examples thereof are the polyamides derived from terephthalic and/or isophthalic acid and trimethyl-hexamethylene diamine; from adipic acid and meta-xylylene diamine; from adipic acid, azelaic acid and 2,2-bis-(p-aminocyclohexyl) propane; or from terephthalic acid and 4,4'-diamino-dicyclohexylmethane.

Mixtures and/or copolymers of two or more of the above polyamides or of prepolymers thereof can be used as well.

Preferred polyamides are nylon 6, nylon 6,6, nylon 11 and nylon 12; most preferred are nylon 6 and nylon 6,6.

The term "polyamide",whenever used in the present specification and in the appended claims, also comprises the block polyamides of types A-B and A-B-A, in which A is a polyamide block and B is a polyalkylene glycol.

The average molecular weight of the polyamides is advantageously higher than about 10,000 and preferably higher than about 15,000, and their melting point is preferably higher than about 200 °C.

The olefinic elastomeric component on which the vinylaromatic monomer is grafted preferably is a rubber-like copolymer, having a Mooney viscosity (ML-4) at 100 °C ranging from 10 to 150, of at least two different (preferably $C_2$-$C_8$) alpha-mono-olefins which preferably have a straight chain (such as ethylene, propylene, butene-1, octene-1 and the like) and at least one other copolymerizable monomer, generally a polyene and typically a non-conjugated diene. Preferably one of the alpha-mono-olefins is ethylene. The weight ratio of ethylene to the (at least one) other alpha-mono-olefin in the rubber-like copolymer is usually in the range of from 20/80 to 80/20. Particularly preferred copolymers are the ethylene/propylene/non-conjugated diene (triene) terpolymers in which the non-conjugated diene (or triene) can be cyclic or acyclic such as: 5-methylene-2-norbornene; 5-ethylidene-2-norbornene; 5-isopropylene-3-norbornene; pentadiene-1,4; hexadiene-1,4: hexadiene-1,5; heptadiene-1,5; dodecatriene-1,7,9; methyl-heptadiene-1,5; norbornadiene-2,5; cyclo-octadiene-1,5; dicylopentadiene; tetrahydroindene; 5-methyl-tetrahydroindene, etc. The diene (triene) content of said (ter)polymers usually ranges from about 2 to about 20% by weight and preferably from about 8 to about 18% by weight of monomeric diene (triene) units in the rubber-like terpolymer. Particularly favorable results may be obtained by using a rubber-like terpolymer having a Mooney viscosity (ML-4) at 100 °C of from 30 to 90 and a iodine number of (at least or) higher than 5 and preferably ranging from 10 to 40. The term "vinylaromatic monomer", whenever used in the present specification and in the appended claims, comprises the ethylenically unsaturated compounds of general formula (V):

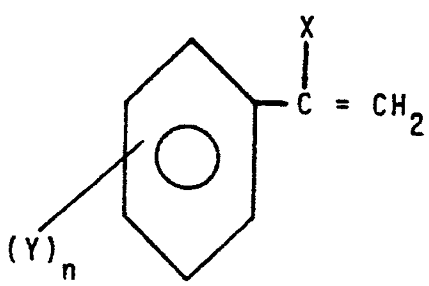

(V)

wherein:

X represents hydrogen or an alkyl radical having from 1 to 4 carbon atoms (e.g. methyl);

Y represents halogen or an alkyl radical having from 1 to 4 carbon atoms (e.g. methyl or ethyl); and

n is O or an integer of from 1 to 5. (For n $\geqq$ 2 the groups Y may be the same or different.)

Examples of vinyl-aromatic monomers having the above general formula (V) are styrene; methyl-styrene; mono-, di-, tri-, tetra- and penta-chlorostyrene and the corresponding alpha-methyl-styrenes; styrenes which are alkylated in the nucleus and the corresponding alpha-methyl-styrenes such as ortho-and para-methyl-styrenes, ortho- and para-ethyl-styrenes, ortho- and para-methyl-alpha-methyl-styrenes etc.

These monomers can be utilized either alone or in admixture with one another.

It is to be understood that in the grafting polymerization not all of the vinyl-aromatic monomers has to be grafted onto the rubber-like substrate; usually a portion of the monomer forms a free polymer which is present in physical admixture with the grafted polymer.

Preferably, the molecular weight of the vinylaromatic polymer favourably influences the impact strength characteristics of the mixtures. Thus, for example, excellent impact strength results are obtained with vinylaromatic polymers having an average molecular weight of from about 100,000 to about 2,000,000.

The amount of vinylaromatic polymer grafted onto the olefinic elastomer is not critical and generally ranges from 10 to 50% by weight (calculated on the grafted polymer) while the amount of free vinylaromatic polymer ranges from 10 (and preferably 20) to 50% by weight.

The amount of monomer grafted onto the polymer can be determined, e.g., by extraction of the product with a solvent for the ungrafted resin.

The amount of olefinic elastomer containing, grafted thereon, vinylaromatic monomer can reach 100 parts by weight and preferably ranges from 5 to 50 parts by weight for 100 parts by weight of the mixture of functionalized polyphenylene ether (A) and polyamide (B). Amounts lower than 5 parts by weight usually have a negligible effect on the impact strength of the compositions, while amounts higher than 100 parts by weight strongly influence the impact strength, but generally at the expense of other (physical) properties. Thus, in order to obtain compositions having an excellent balance of properties it is advisable to maintain the olefinic elastomer content below 100 parts by weight, and preferably below 50 parts by weight per 100 parts by weight of (A) + (B).

In addition to components (A), (B) and (C) the compositions of the present invention can contain reinforcing additives such as, for example, glass fibres, carbon fibres, organic and inorganic high-modulus fibres, metal fibres, inorganic fillers, etc., as well as antiflame agents, dyestuffs, pigments, stabilizers, lubricants, etc., which are well-known to those skilled in the art.

The reinforcing additives generally are used in amounts not exceeding 50% by weight and preferably not higher than 30% by weight, calculated on the total composition.

Particularly preferred reinforcing additives are glass fibres which can be untreated or, even better, are treated with silanes or titanates, as is well-known in the art.

Suitable stabilizers for the compositions of the present invention comprise many of the known thermal and oxidation stabilizers which are suitable and generally utilized for polyamides, polyphenylene ether resins and elastomers. For example, liquid phosphates and hindered phenols can be added to the compositions of the present invention in amounts which usually range from 0.05 to 5% by weight.

The method for producing the compositions of the present invention is not critical and any conventional method is utilizable.

Generally, mixing is carried out in the molten state, and time and temperature are selected and determined as a function of the composition. The temperatures are generally in the range of from about 200 to about 300 °C.

Any known mixing unit can be utilized. The method can be continuous or discontinuous. Specifically, single-screw and double-screw extruders, Banbury mixers, mixing rollers and the like can be used.

Although all of the components of the composition can be introduced at the beginning and directly into the mixing unit, it may prove advantageous in certain instances to pre-mix one of the two resins, preferably the polyphenylene ether (A), with the olefinic elastomer (C).

The compositions of the present invention are easily processable by injection molding or by extrusion and exhibit a combination of properties which makes them particularly suitable for use in the manufacture of shaped articles having a high impact strength along with a good thermal stability and a low water sensitivity. Thanks to these properties, the compositions of the present invention can be used in the motor transport sector, for the manufacture of articles which can be furnace-painted, parts which come into contact with motors, electric household appliances, electronic articles and technical articles in general, e.g., in the form of cups, pans, boxes, containers, panels, sheets, rods, etc.

The following examples are given for illustrative purposes only.

EXAMPLE 1

Preparation of the functionalized polyphenylene ether resin

Into a one-liter reactor equipped with stirrer, reflux condenser and thermostatic bath there were introduced:

- 100 g of poly(2,6-di-methyl-1,4-phenylene)ether having an intrinsic viscosity of 0.47 dl/g (in chloroform at 23 °C), dissolved at 105 °C in 350 ml of toluene;
- 50 ml of toluene containing, dissolved therein, 3 g of maleic anhydride;
- 0.5 g of benzoyl peroxide.

The mixture was heated to 110 °C and maintained at this temperature for 1 hour. After cooling to 70 °C, the reaction product was poured into 1,500 ml of acetone. The resulting precipitate was filtered, washed with acetone until complete removal of the residual free maleic anhydride, and dried in an oven at 90 °C under vacuum (10 mm Hg) for 6 hours.

Thus, poly(2,6-di-methyl-1,4-phenylene)ether containing groups derived from maleic acid was obtained. The maleic acid content was 0.42% b.w., calculated on the functionalized polymer.

Preparation of the composition

Into a Brabender plastograph equipped with a 50 ml cell and heated to 240 °C there was introduced a mixture, prepared at room temperature, of:

- 70% by weight of poly(2,6-di-methyl-1,4-phenylene)ether functionalized with maleic anhydride, as obtained above;
- 30% by weight of an EPDM elastomer grafted with styrene and having the following composition: 40% by weight of EPDM rubber (Mooney viscosity (ML-4) at 100 °C = 62-72 and iodine number = 18), 28% by weight of grafted styrene and 32% by weight of styrene in the form of free homopolymer having a weight average molecular weight (Mw) equal to 1,119,000, mixed with said rubber.

The Brabender mastication speed was programmed according to a cycle of 50-120-50 r.p.m. and the residence time of the mixture in the plastograph was 4 minutes.

The mixture leaving said first Brabender plastograph was fed to a second plastograph of the same type, together with nylon 6 and functionalized poly (2,6-di-methyl-1,4-phenylene) ether, as obtained above, in the following proportions:

- 33.3% by weight of the mixture leaving the first plastograph, consisting of 70% b.w. of functionalized poly(2,6-di-methyl-1,4-phenylene)ether and 30% b.w. of grafted EPDM elastomer;
- 41% by weight of nylon 6 (available from Montedipe S.r.l. under the tradename TERNIL® B27; average molecular weight = 18,000); and
- 25.7% by weight of poly(2,6-di-methyl-1,4-phenylene)ether functionalized with maleic anhydride as obtained above.

The operative conditions were like those in the first plastograph.

The resulting mixture was ground, compression molded at 260 °C and characterized.

The obtained results are given in the following Table.

EXAMPLE 2 (comparison test)

Preparation of the composition

Example 1 was repeated, replacing the functionalized poly(2,6-di-methyl-1,4-phenylene)ether by the corresponding unfunctionalized polymer.

The characteristics of the mixture so obtained are indicated in the following Table.

EXAMPLE 3

Into a Brabender plastograph, equipped with a 50 ml cell and heated to 240 °C, there was introduced a mixture, prepared at room temperature, of:

- 70% by weight of poly(2,6-di-methyl-1,4-phenylene)ether having an intrinsic viscosity of 0.47 dl/g (in chloroform at 23 °C);
- 30% by weight of a EPDM elastomer grafted with styrene and having the same composition as that of example 1; and
- 1 part, per 100 parts by weight of the above mix, of maleic anhydride.

The Brabender mastication speed was programmed according to a cycle of 50-120-50 r.p.m. and the residence time of the mixture in the plastograph was 4 minutes.

The mixture leaving the first plastograph was fed to a second plastograph of the same type together with nylon 6 and poly(2,6-dimethyl-1,4-phenylene)ether in the following proportions:

- 33.3% by weight of the mixture leaving the first plastograph;
- 41% by weight of nylon 6 (the same as in example 1); and
- 25.7% by weight of poly(2,6-di-methyl-1,4-phenylene)ether having an intrinsic viscosity of 0.47 dl/g (in chloroform at 23 °C).

The operative conditions were the same as those in the first plastograph.

The resulting mixture was ground, compression molded at 260 °C and characterized.

The obtained results are reported in the following Table.

EXAMPLE 4

Example 3 was repeated, changing only the amount of maleic anhydride (from 1% to 0.5% by weight, calculated on the mixture of poly(2,6-di-methyl-1,4-phenylene)ether and EPDM elastomer grafted with styrene).

The characteristics of the resulting mixture are reported in the following Table.

EXAMPLE 5

Example 3 was repeated, changing only the amount of maleic anhydride (from 1% to 1.5% by weight, calculated on the mixture of poly(2,6-di-methyl-1,4-phenylene)ether and EPDM elastomer grafted with styrene).

The characteristics of the resulting mixture are indicated in the following Table.

In the Table, the measured characteristics and the employed methods were as follows:

Mechanical properties

The IZOD notch resiliency was determined at 23°C, according to ASTM D 256, on 3.2 mm thick specimens.

Thermal properties

The VICAT softening temperature was determined at 1 kg and at 5 kg in oil, according to ISO 306.

Rheological properties

The melt flow index (M.F.I.) was determined at 270°C and 10 kg according to ASTM D 1238.

TABLE

| CHARACTERISTICS UNITS | IZOD RESILIENCY J/m | VICAT 1 kg, °C | VICAT 5 kg, °C | M.F.I. g/10' |
|---|---|---|---|---|
| EXAMPLE 1 | 436 | 201 | 182 | 39 |
| EXAMPLE 2 * | 28 | 199 | 178 | 59 |
| EXAMPLE 3 | 675 | 201 | 180 | 34 |
| EXAMPLE 4 | 615 | 200 | 181 | 45 |
| EXAMPLE 5 | 630 | 201 | 179 | 37 |

* Comparative example.

## Claims

1. A thermoplastic composition comprising a resin composition of:

   (A) from 5 to 95% by weight of polyphenylene ether functionalized with a compound containing at least one carbon-carbon double or triple bond and at least one group selected from carboxylic acid, anhydride, amide, imide, ester, amino and hydroxy groups; and

(B) from 95 to 5% by weight of polyamide; and
(C) from 1 to 100 parts by weight, per 100 parts by weight of mixture (A) + (B), of olefinic elastomer having a vinylaromatic monomer grafted thereon.

2. Composition according to claim 1, wherein the proportions of components (A), (B) and (C), calculated on the total composition, are:
(a) from 25 to 70% by weight of functionalized polyphenylene ether (A);
(b) from 25 to 70% by weight of polyamide (B), and
(c) from 5 to 50% by weight of olefinic elastomer (C); the sum (A) + (B) + (C) being equal to 100%.

3. Composition according to anyone of claims 1 and 2, wherein the content of vinylaromatic monomer in the olefinic elastomer (C) is at least 1% by weight and preferably ranges from 30 to 60% by weight.

4. Composition according to anyone of the preceding claims, wherein the polyphenylene ether (i) is a polymer or copolymer containing a plurality of structural units of general formula (I):

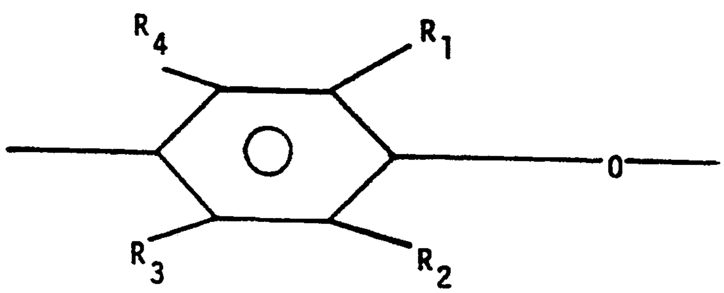

(I)

wherein $R_1$, $R_2$, $R_3$ and $R_4$ independently represent a substituted or unsubstituted $C_1$-$C_{18}$ hydrocarbon radical, halogen or hydrogen; or (ii) has the general formula (II):

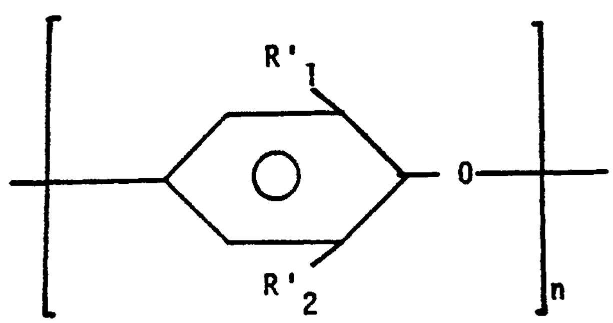

(II)

wherein $R'_1$ and $R'_2$ independently are alkyl radicals containing from 1 to 4 carbon atoms and n is at least 50 and preferably ranges from about 60 to about 600; and preferably is poly(2,6-dimethyl-1,4-phenylene)ether having a number average molecular weight ranging from about 5,000 to about 120,000 and an intrinsic viscosity of at least 0.1 dl/g,particularly from 0.30 to 0.90 dl/g, as measured in chloroform at 23° C.

5. Composition according to anyone of the preceding claims, wherein the functionalizing compound is selected from maleic anhydride, maleimide, fumaric acid and mixtures thereof.

6. Composition according to anyone of the preceding claims, wherein the amount of functionalizing compound ranges from 0.01 to 5, preferably 0.1 to 3 parts by weight per 100 parts by weight of polyphenylene ether.

7. Composition according to anyone of the preceding claims, wherein the polyamide is nylon 6 and/or nylon 6,6.

8. Composition according to anyone of the preceding claims, wherein the olefinic elastomer is a rubber-like copolymer, having a Mooney viscosity (ML-4) at 100°C ranging from 10 to 150, of at least two different alpha-mono-olefins and at least one copolymerizable polyene monomer, preferably a non-conjugated diene.

**9.** Composition according to claim 8, wherein one alpha-mono-olefin is ethylene and the weight ratio of ethylene to the at least one other alpha-mono-olefin is in the range of from 20/80 to 80/20.

**10.** Composition according to anyone of the preceding claims, wherein the olefinic elastomer is an ethylene/propylene/non-conjugated diene terpolymer wherein the diene content ranges from about 2 to about 20% by weight and preferably from about 8 to about 18% by weight, calculated on the terpolymer, said terpolymer having a Mooney viscosity (ML-4) at 100°C of from 30 to 90 and a iodine number of at least 5 and preferably ranging from 10 to 40.

**11.** Composition according to anyone of the preceding claims, wherein the vinylaromatic monomer has the general formula (V):

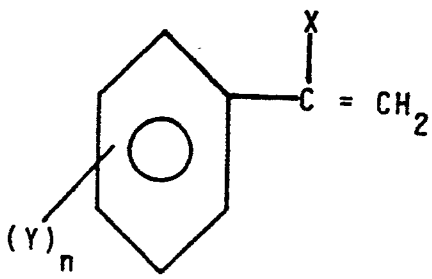

(V)

wherein:

X represents hydrogen or an alkyl radical having from 1 to 4 carbon atoms;
Y represents halogen or an alkyl radical having from 1 to 4 carbon atoms; and
n is 0 or an integer ranging from 1 to 5.

**12.** Composition according to anyone of the preceding claims, wherein the vinylaromatic monomer is partially grafted onto the rubber-like substrate and partially forms a polymer in physical admixture with the grafted polymer, said vinylaromatic polymer preferably having an average molecular weight of from about 100,000 to about 2,000,000.

**13.** Composition according to claim 12,wherein the amount of grafted vinylaromatic monomer ranges from 10 to 50% by weight and the amount of free polymer ranges from 20 to 50% by weight.

**14.** Composition according to anyone of the preceding claims, containing, in addition, reinforcing additives, antiflame agents, dyestuffs, pigments, stabilizers and/or lubricants.

**15.** Composition according to claim 14, wherein the reinforcing additive is selected from glass fibres, carbon fibres, organic and inorganic high-modulus fibres and metal fibres, in an amount not higher than 50% by weight and preferably not higher than 30% by weight, calculated on the total composition.